# EUROPEAN PATENT SPECIFICATION

(11) **EP 0 929 435 B1**
(45) Date of publication and mention of the grant of the patent: **28.06.2000**
(21) Application number: 96932406.0
(22) Date of filing: 09.10.1996
(51) Int. Cl.: B62B 5/02

(54) **ELEVATING UNIT FOR A HAND TRUCK**
HEBE-VORRICHTUNG FÜR EINE HANDKARRE
UNITE ELEVATRICE POUR CHARIOT MANUEL

(43) Date of publication of application: 21.07.1999
(73) Proprietor: Jeavons, Peter K., Brantford, Ontario N3T 6H3 (CA)
(72) Inventor: Jeavons, Peter K., Brantford, Ontario N3T 6H3 (CA)
(74) Representative: Coates, Ian Harold
(86) International application number: CA9600670
(87) International publication number: WO9815448

(56) References cited:
- WO-A-93/17901
- US-A- 2 608 258
- US-A- 3 893 679

## Description

### FIELD OF THE INVENTION

This invention relates to elevating units for attachment to manual hand trucks, and more particularly, to such elevating units that are readily mountable on and removable from existing manual hand trucks.

### BACKGROUND OF THE INVENTION

Various types of conventional hand trucks for manual hauling of payloads, such as boxes, appliances, packages, sacks, and so on, onto and off of delivery trucks, are well known. Manual manipulation of hand trucks onto or off of a delivery truck is often hazardous and may require two or more people to physically perform the lowering, or lifting of the hand truck and supported payload, especially when moving large, heavy payloads such as appliances. Further, during use of such hand trucks, it is quite common to encounter stairs, which, by their very nature, cannot be readily traversed by a conventional hand truck carrying a significant payload.

Some assistance to the problems outlined above with respect to the use of manual hand trucks has been supplied by powered hand trucks that have an integral selectively controllable extension leg that is extendable a significant distance below the level of the hand tuck, and is subsequently retractable. These hand trucks are typically electrically powered as supplied by a rechargeable battery. See, for example, United States Patent No. 2,608, 258, (Jenkins) to a power hand truck, and Canadian Patent No. 1,071,148 (Jeavons). In this manner, the extension leg can be used to manoeuvre the hand truck onto or off a delivery truck, or up or down stairs. Such extension leg type hand trucks are complicated, expensive, and none are known to be entirely satisfactory. The extension legs and associated drive mechanism, including a power source, that form an integral part of such prior art powered hand trucks tend to make them heavy, which is undesirable for the easy and safe manoeuvring of the hand truck and payload. Further, acceptance of such powered hand trucks has met with resistance, particularly with regard to those operators who would be required to replace a large inventory of existing manual hand trucks with new, expensive power models, thus rendering their investment in the manual hand trucks of little residual value. An example of such an operator would be a large courier or cartage company who might own, in some instances, thousands of manual hand carts. Accordingly, a need exists in the art for an elevating unit which is readily mountable onto and removable from an existing manual hand truck, which elevating unit provides for easy manoeuvring, with power assist, of the hand truck together with a payload thereon, onto and off of delivery trucks and up and down stairs, and the like. One suggestion for a detachable elevating unit is disclosed in PCT International Patent Application Ser. No. PCT/SE93/00221 (Arronet Teknik AB), published on September 16, 1993 under publication number WO 93/17901. This prior art patent applciation fails to disclose an efficient and easy to use means for readily mounting and dismounting the elevating unit onto the hand truck with the same facility as the elevating unit/hand truck combination of the present invention. As such, the Arronet Teknik AB device is the closest piece of prior art to the present invention, and the preabmle of claim 1 herein is specifcally directed to this reference.

### SUMMARY OF THE INVENTION

In accordance with the present invention there is provided an improved elevating unit for use in combination with a hand truck. The hand truck has a frame extending in a substantially vertical direction from a lower end to an upper end and extending laterally from a left side to a right side, upper and lower cross-members extending substantially between said left and right sides of said frame, a handle means disposed adjacent said upper end, a front side and a back side, with a payload supporting surface extending forwardly from said front side, and a pair of wheels operatively mounted on said frame adjacent the lower end thereof for rotation about a common lateral axis; wherein, the elevating unit has a main body portion having a front side and a back side, an extension leg having a foot portion and being operatively mounted on said main body portion for selectively controlled movement between a first extended position whereat said foot portion is disposed below said lower end of said frame and a second retracted position whereat said foot portion is raised from being disposed below said lower end of said frame, drive means operatively coupled to said extension leg to selectively move said extension leg in a first direction from said first extended position to said second retracted position and in a second direction from said second retracted position to said first extended position, control means operatively coupled to said drive means to permit selective actuation of said drive means in said first and second directions. The improvement to the combination of the invention comprises the provision of a first bracket means mounted on the main body portion in disposed relation to said front side of said main body portion for readily removable secured engagement of the main body portion to the upper cross-member of the hand truck, the first bracket means being substantially C-shaped in cross section, defining a forwardly facing opening, with a lower arm of the C-shape forming a load bearing portion, and with an upper arm of the C-shape forming a weight transmitting portion for transmitting a portion of the weight of said elevating unit to said upper cross-member. The upper and lower arm portions are spaced apart sufficiently to receive the upper cross-member there between. A channel blocking means is provided that is readily movable between a first blocking position, whereat the channel blocking means occludes the opening to thereby hold the upper cross-member in operative, secured relation, and a second open position whereat the channel blocking means is removed from occluding the opening, to thereby provide for ingress and egress of the upper cross-member. A second bracket means is rigidly mounted on the main body portion in disposed relation to the back side of the main body portion for readily removable secured engagement of the main body portion to the lower cross-member, the second bracket means comprising a weight transmitting portion shaped and dimensioned to rest on the lower cross-member in weight transmitting relation for transmitting a portion of the weight of the elevating unit to the lower cross-member.

Other advantages, features and characteristics of the present invention, as well as methods of operation and functions of the related elements of the structure, and the combination of parts and economies of manufacture, will become more apparent upon consideration of the following detailed description and the appended claims with reference to the accompanying drawings, the latter of which is briefly described hereinbelow.

### BRIEF DESCRIPTION OF THE DRAWINGS

A preferred embodiment of this invention will now be described by way of example in association with the accompanying drawings in which:
**Figure 1A** is a perspective view of the preferred embodiment of the elevating unit of the present invention about to be attached to a conventional manual hand truck;
**Figure 1B** is a perspective view of the elevating unit and manual hand truck of **Figure 1A**, with the elevating unit operatively attached to the manual hand truck;
**Figure 2** is a front elevational view of the elevating unit attached to the manual hand truck, as in **Figure 1B**;
**Figure 3** is a side sectional view of the elevating unit attached to the manual hand truck, taken along section line 3-3 of **Figure 2**, with the extension leg shown in its retracted position;
**Figure 4** is an interrupted side sectional view of the elevating unit attached to the manual hand truck, similar to **Figure 3**, but with the extension leg shown in its extended position;
**Figure 5** is an enlarged perspective view of the elevating unit of **Figure 1A**;
**Figures 6A through 6E** show the elevating unit of **Figures 1A and 1B** being used to manipulate a manual hand truck and a payload thereon up a flight of stairs; and,
**Figures 7A and 7B** show the elevating unit of **Figures 1A and 1B** being used to assist a manual hand truck and payload thereon up onto a delivery truck.

### DETAILED DESCRIPTION OF A PREFERRED EMBODIMENT

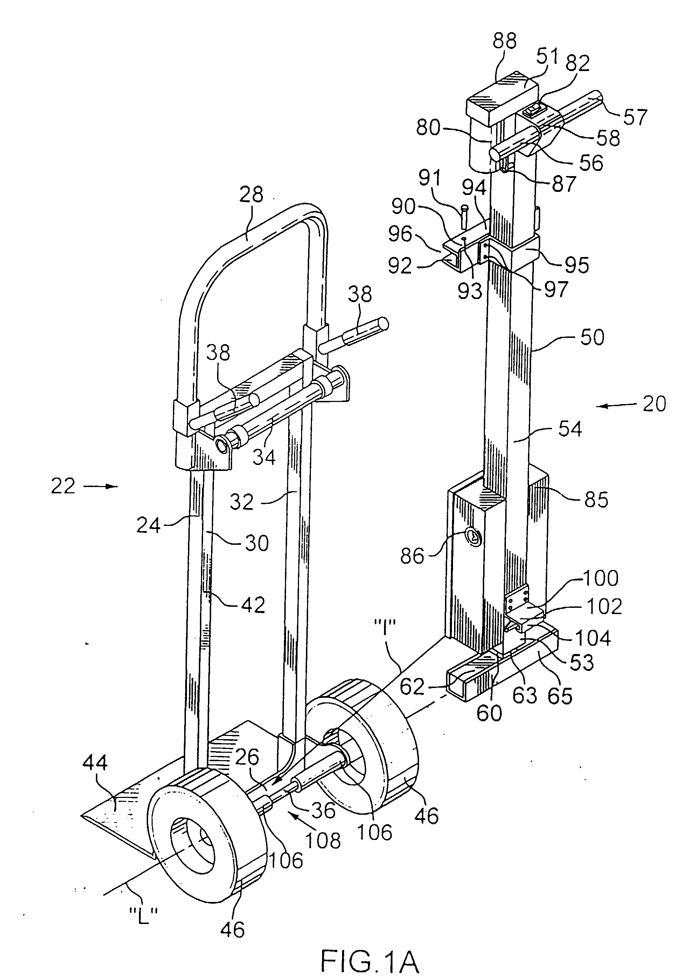

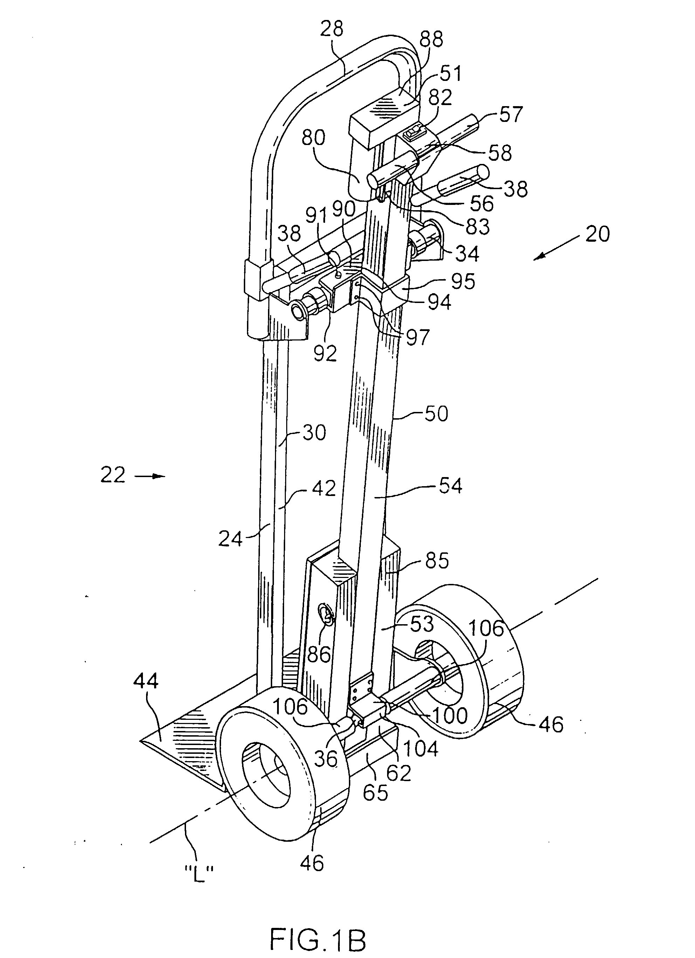

Reference will now be made to Figures 1 through 7A, which Figures show the elevating unit of the present invention, as indicated by general reference numeral 20, for attachment to a conventional manual hand truck, as indicated by the general reference numeral 22. One example of a conventional manual hand truck is that available under the trademark MAGLINER from MAGLINE INC. of Pinconning, Michigan, 48680 U.S.A.. Such a hand truck 22 has a frame 24 extending in a substantially vertical direction from a lower end 26 to an upper end 28, and extending laterally from a left side 30 to a right side 32. An upper cross-member 34 and a lower cross-member 36 extend substantially between the left 30 and right 32 sides of the frame 24. A handle means in the form of two grip handle members 38, is disposed adjacent the upper end 28. The hand truck 22 has a front side 40 and a back side 42. A payload supporting surface 44 extends forwardly from the front side 40, and a pair of wheels 46 are operatively mounted on the crane 24 adjacently lower end 26 thereof, for rotation about a common lateral axis "L".

The elevating unit 20 comprises, when in place on the hand truck 22, a main body portion 50 having a front side 52 and a back side 54. The main body portion 50 essentially houses most of the moving components of the elevating unit 20, and is made of a strong yet light material, such as aluminum, or an aluminum-magnesium alloy. A pair of oppositely directed rubber covered grip handle members 56, 57 each extend outwardly from a base portion 58.

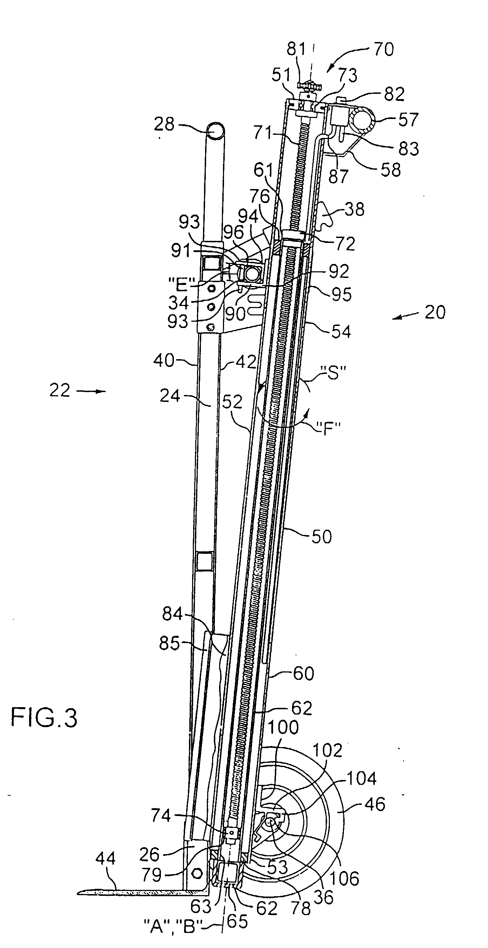

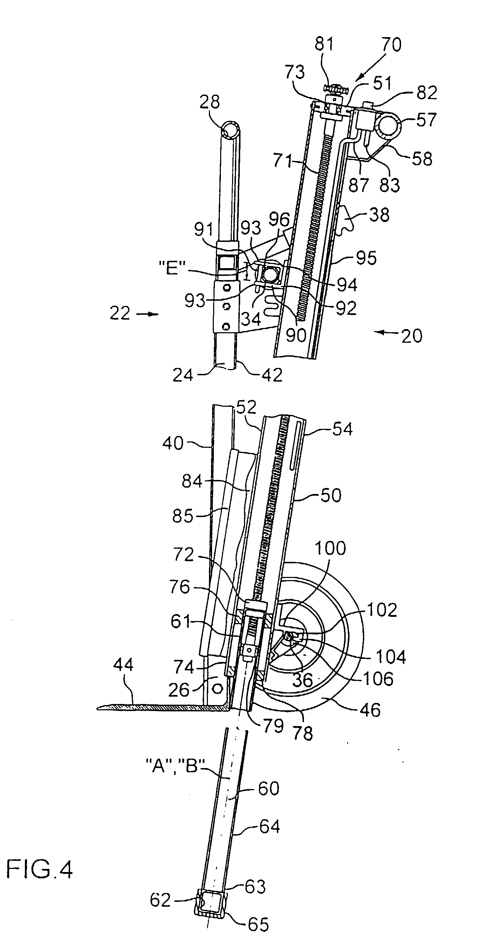

An extension leg 60, having a foot portion 62 disposed at the bottom end 63 thereof, is operatively mounted within the main body portion 50 for selectively controlled movement between a first extended position and a second retracted position. The extension leg 60 comprises a hollow tube 64 having a substantially square cross-section and is elongate along a first longitudinal axis "A", as can be best seen in Figures 3 and 4. The extension leg 60 is disposed in sliding relation within the main body portion 50. A slide bearing means in the form of a first slide bearing assembly 76 and a second slide bearing assembly 78, is disposed in operative relation between the extension leg 60 and the main body portion 50. The first slide bearing assembly 76 is mounted on the extension leg 60 adjacent the top end 61 thereof for sliding engagement with the main body portion 50. The second slide bearing assembly 78 is mounted on the main body portion 50 adjacent the bottom end 53 thereof. The extension leg 60 is substantially vertically disposed when in its first extended position and in its second retracted position, and moves linearly along its first longitudinal axis "A" when moving between its first extended position and its second retracted position.

Preferably, the foot portion 62 has a rubber pad 65 on the bottom thereof for the purpose of augmenting traction of the foot portion 62. In the first extended position, the foot portion 62 is disposed below the lower end 26 of the frame 24. In the second retracted position, the foot portion 62 is raised from being disposed below the lower end 26 of the frame 24.

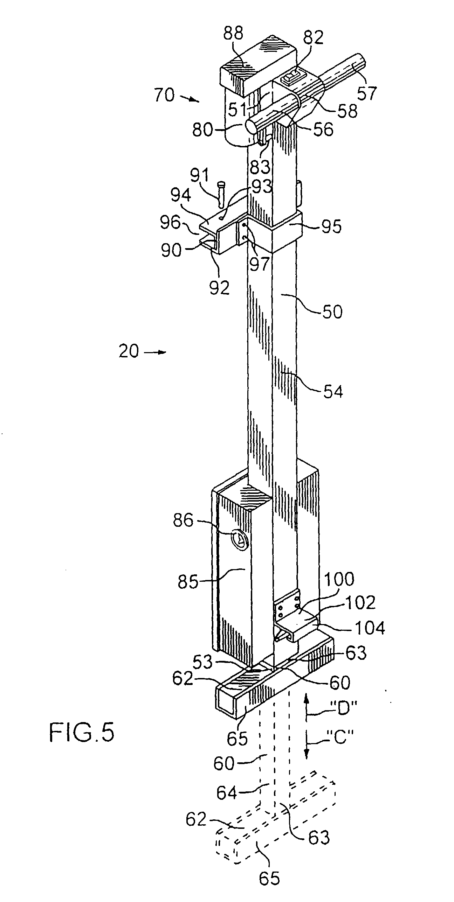

A drive means, as indicated by the general reference numeral 70, is operatively coupled to the extension leg 60 to selectively move the extension leg 60 in a first direction, as indicated by arrow "C" of Figure 5, to the first extended position, and in a second direction, as indicated by arrow "D" of Figure 5, from the first extended position to the second retracted position. The drive means 70 preferably comprises a substantially vertically disposed elongate threaded rod 71 having a second longitudinal axis "B" substantially aligned with the first longitudinal axis "A" (see Figures 3 and 4). The elongate threaded rod 71 is operatively mounted within the main body portion 50 by means of a first rotational bearing 73 disposed at the top of the main body portion 50 and a second rotational bearing 74 disposed at the bottom of the threaded rod 71, for rotation in opposed first and second rotational directions, as indicated by arrows "F" and "S" in Figure 3, respectively, about the second longitudinal axis "B". The second rotational bearing 74 is disposed within a third slide bearing 79 so as to retain the threaded rod 71 in sliding relation with respect to the extension leg 60, and also to preclude lateral movement of the threaded rod 71 within the extension leg 60. A recirculating ball nut 72 is threadibly engaged on the elongate threaded rod 71 for movement along the length thereof as the threaded rod 71 rotates. The extension leg 60 is secured to the recirculating ball nut 72 for movement therewith as aforesaid, in surrounding relation to the threaded rod 71. Rotation of the threaded rod 71 in its first rotational direction "F" causes corresponding linear movement of the extension leg 60 in its first direction "C" towards its first extended position. Rotation of the threaded rod 71 in its second rotational direction "S" causes corresponding linear movement of the extension leg 60 in its second direction "D", toward its second retracted position.

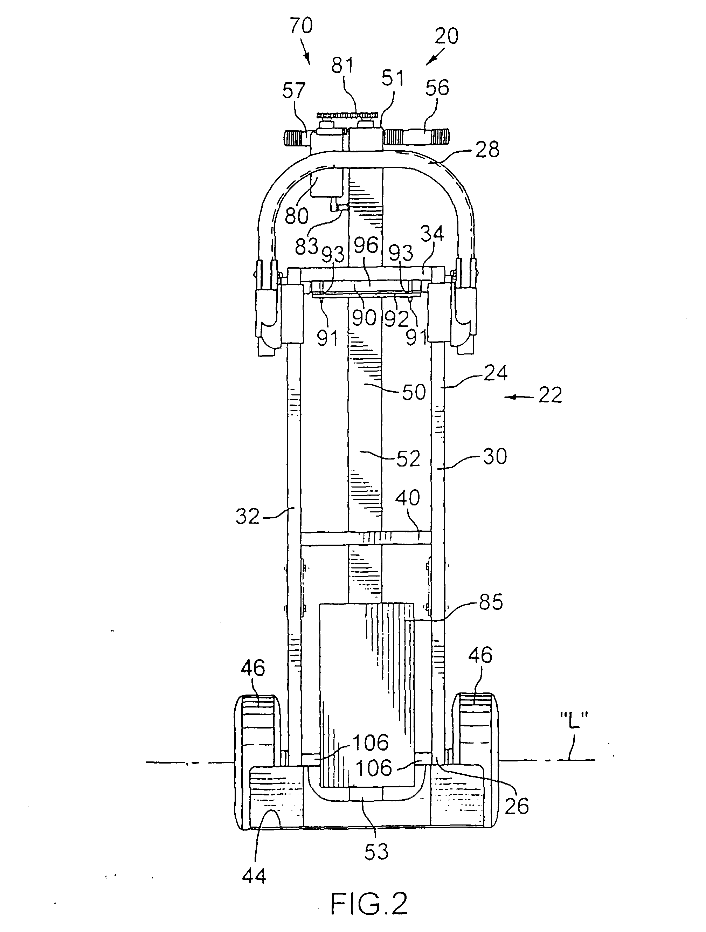

In the preferred embodiment shown, the drive means 70 further comprises a motor means in the form of an electrically energizable reversible motor 80 operatively connected in driving relation to the elongate threaded rod 71 by means of a drive chain 81, as can be best seen in Figures 2, 3, and 4, to rotate the elongate rod 71 in the opposed first "F" and second "S" rotational directions. The electrically energizable motor 80 is mounted at the top end 51 of the main body portion 50 at either the left side or the right side thereof, so as to not be in the way of the frame 24 of the hand truck 22, or in the way of an operator of the elevating unit 20. A guard member 88 is mounted over the drive chain 81, as can be seen in Figures 1A, 1B, 5, 6A - 6E, 7A, and 7B.

A control means 81 is operatively coupled to the drive means 70 to permit selective actuation of the drive means 70 in its first rotational direction, as indicated by arrow "F", and its second rotational direction as indicated by arrow "S". In the preferred embodiment shown, the control means 81 comprises a three-position electrical switch 82 connected in selective electrically conductive relation between an electrical power source, such as an electrical power storage cell 84, by a first electrical cable 87, and the electrically energizable motor 80 by a second electrical cable 83 (see Figures 3 and 4). When the three-positional electrical switch 82 is in its first position, the motor 80 is energized so as to cause the threaded rod 70 to rotate in its first rotational direction "F". When the three-position electrical switch 82 is in its second position, the reversible motor 80 is energized so as to cause the threaded rod 71 to rotate in its second opposite rotational direction "F". When the three-position electrical switch is in its third position, which third position is preferably a central position, the reversible motor 80 is not energized, thus precluding the threaded rod 71 from rotating.

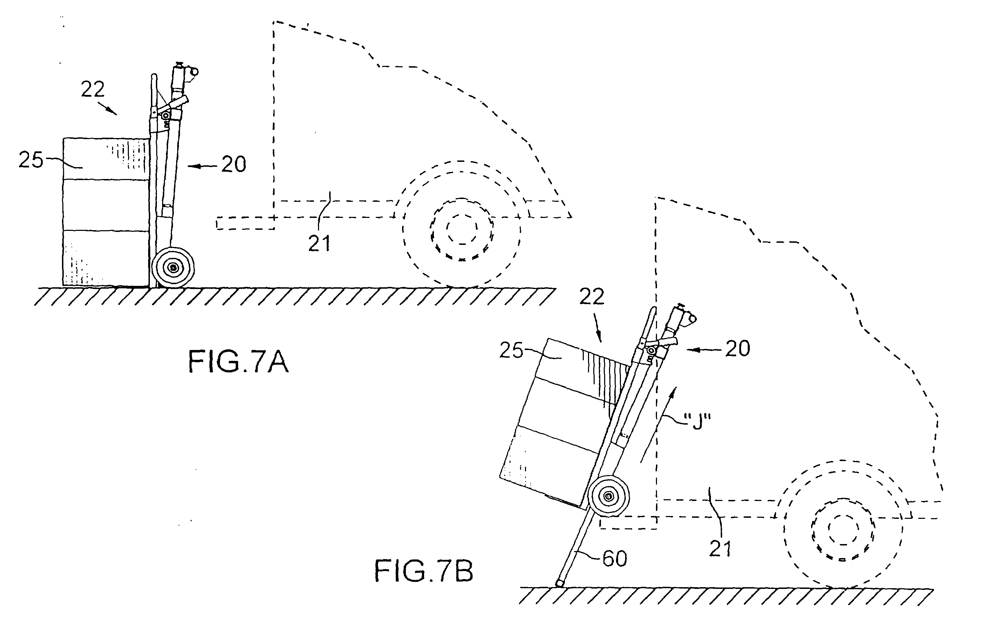

In the preferred embodiment shown, the electrical power storage cell 84 is mounted in an enclosure 85 in order to cover the storage cell 84 for safety reasons and also to preclude damage to the electrical power storage cell 84. Preferably, the enclosure 85, and therefore the electrical power storage cell 84, are located adjacent the bottom end 53 of the main body portion 50 so as to help provide for a low centre of gravity of the elevating unit 20, as the electrical power storage cell 84 is typically somewhat heavy. The electrical power storage cell 84 is rechargeable *in situ* by means of a conventional electrical cord (not shown) plugged into a receiving socket 86 mounted in a side wall of enclosure 85. The electrical power storage cell 84 can thereby be readily recharged when it is not in use, such as when it is in a delivery truck 21 (see Figures 7A and 7B). The elevating unit 20 would be not in use while the delivery truck 21 is on route between delivery destinations, or in the event the elevating unit 20 is not needed to help negotiate the hand truck 22 onto or off of the delivery truck 21 or up or down a set of stairs.

A first bracket means 90 is mounted on the main body portion 50 of the elevating device 20 for removable secure engagement of the main body portion 50 to the upper cross-member 34 of the manual hand truck 22 by means of a brace bracket 95 and threaded fasteners 97. In the preferred embodiment, the first bracket means 90 is disposed at the front side 52 of the main body portion 50 of the elevating unit 20. The first bracket means 90 comprises a load bearing portion 92 shaped and dimensioned to receive the upper cross-member 34 in load bearing relation thereon, and a weight transmitting portion 94 shaped and dimensioned to rest on the upper cross-member 34 in weight transmitting relation so as to transmit a portion of the weight of the elevating unit to the upper cross-menmber 34. The first bracket means 90 is substantially "C"-shaped in cross-section, defining a forwardly facing opening 96. The lower arm of the "C"-shaped bracket means 90 forms a portion of the load bearing portion 92. Thus, the upper arm of the "C"-shaped bracket means 90 forms a portion of the weight transmitting portion 94. The load bearing portion 92 and the weight transmitting portion 94 are spaced apart sufficiently by a distance "E" so as to receive the upper cross-member 34 therebetween, as can best be seen in Figures 3 and 4.

It can be seen that when the extension leg 60 is in its first extended position, the foot 62 is positioned to engage an upwardly facing surface such as the ground, the floor, or the like. In this manner, the elevating unit 20 must support the entire load of the hand truck 22 and a payload 25 thereon disposed on the payload supporting surface 44. The load of the hand truck 22 and the payload 25 thereon is borne directly by the load bearing portion 92 of the first bracket means 90.

Further, it can be seen that when the extension legs 60 is in its second retracted position, the foot 62 is not in position to be in contact with the ground, a floor, or the like. The wheels 46 of the hand truck 22 are then in contact with the ground, or the floor, or the like, and support the hand truck 22 and a payload 25 thereon. In this configuration, the hand truck 22 also supports the weight of the elevating unit 20 through the weight transmitting portion 94 of the first bracket means 90.

A channel blocking means, in the form of two cooperating pins 91, is moveable between a first blocking position and a second open position. In the first blocking position, the pins 91 each engage aligned apertures 93 in the load bearing portion 92 and the weight transmitting portion 94 of the first bracket means 90. The pins 91 are held in place by gravity, so as to occlude the opening 96, thereby holding the upper cross-member 34 in operative, secured relation within the opening 96. In the second open position, the pins 91 are removed from the apertures 93, and thereby removed from occluding the opening 96, to thereby provide ingress and egress of the upper cross-member 34. Conventional spring-loaded pins having discrete open and closed positioned may be routinely substituted for the simple pins 91 shown.

A second bracket means 100 is mounted to the main body portion 50 adjacent its lower end for removable secure engagement of the main body portion to the lower cross-member 36. The second bracket means 100 comprises a weight transmitting portion 102 shaped and dimensioned to rest on the lower cross-member 36 in weight transmitting relation, for transmitting a portion of the weight of said elevating unit to said lower cross memeber 36. The second bracket means 100 further comprises a flange portion 104 (see Figures 3 and 4) depending from the weight transmitting portion 102, such that the flange portion 104, the weight transmitting portion 102, and the main body portion 50 together form a downwardly open generally "U"-shaped channel dimensioned to receive the lower cross-member 36 therein.

In the preferred embodiment, the lower cross-member 36 comprises an axle member defining a common lateral axis "L", with a pair of spacer members 106 disposed in surrounding relation around the axle member 36. The spacer members 106 are spaced apart one from the other on the axle member 36 by a centrally disposed gap 108 (see Figure 1A). The second bracket means 100 engages the axle member 36 at the gap 108.

In order to attach the elevating unit 20 to a manual hand truck 22, the foot portion 62 of the extension leg 60 is positioned between the axle 36 and the frame 24 of the hand truck 22, as indicated by arrow "I" in Figure 1A. The second bracket means 100 rests on the axle 36 of the hand truck 22 in the gap 108. The elevating unit 20 is then pushed forwardly at its top so as to pivot about the axle 36, such that the first bracket means 90 moves forwardly towards the upper cross-member 34, until the upper cross-member 34 enters the opening in the substantially "C"-shaped first bracket 90. Pins 91 are then put into place in apertures 93, so as to occlude the opening 96, thereby holding the upper cross-member 34 in operative secured relation.

Attachment of the elevating unit 20 to the manual hand truck 22 is quick and easy, thus allowing an operator of the manual hand truck 22 to include and use the elevating unit 20, as desired, or to not include and not use the elevating unit 20, as desired, without a significant amount of time investment required for attachment and subsequent removal of the elevating unit 20. Such selective use of the elevating unit 20 to assist the manipulation of the manual hand truck 22 is extremely advantageous, as it is usable on an "as needed basis", but is not required to be present on the manual hand truck 22 when not needed, allowing the operator to selectively manipulate only the hand truck 22 and payload 25 thereon.

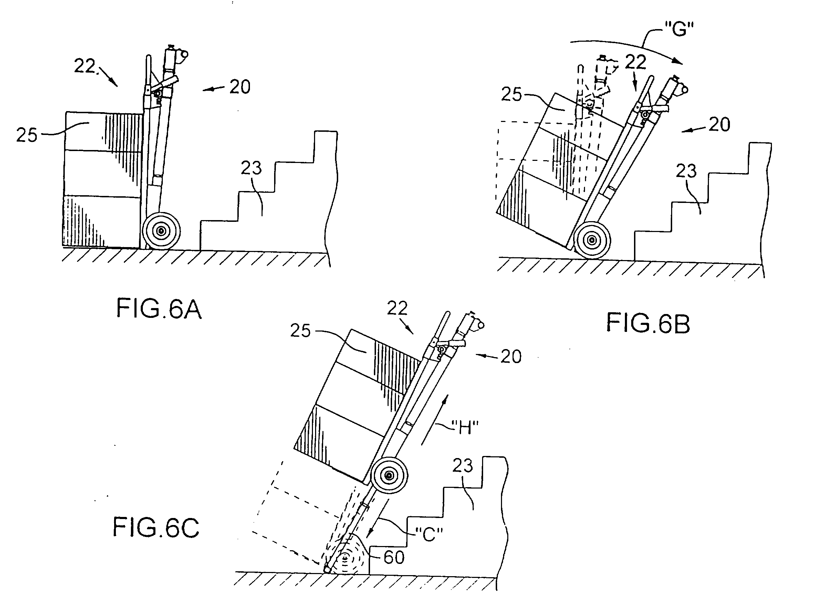

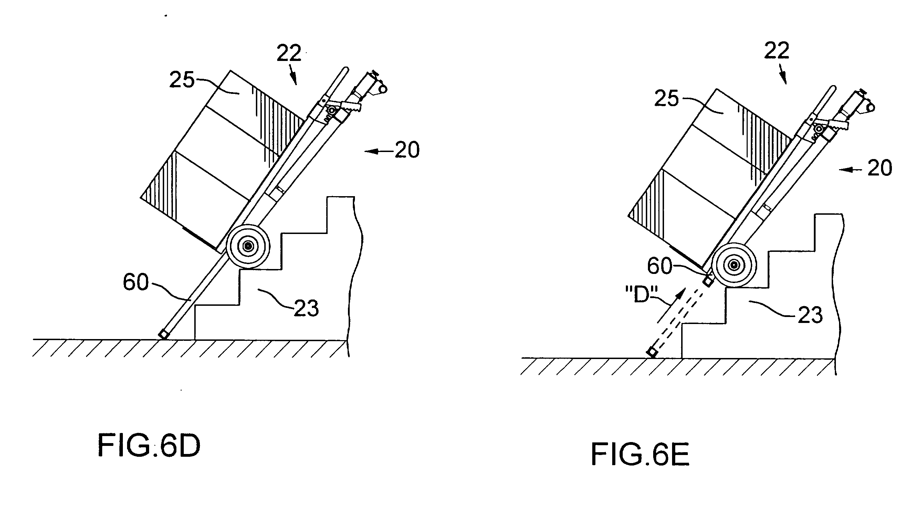

In use, the elevating unit 20 can be used to help manipulate a manual hand truck 22 and a payload 25 thereon up a flight of stairs, as can be best seen in Figures 6A through 6E. To lift the hand truck 22 and payload 25 thereon up the stairs 23, the elevating unit 20 is attached to the hand truck 22, in the manner described immediately above, and the elevating unit 20 and the hand truck 22 are wheeled to the bottom of the stairs 23, as is best seen in Figure 6A. The elevating unit 20 and the hand truck 22 are tilted rearwardly, as indicated by arrow "G" in Figure 6B. The electrical switch 82 is then manipulated to its first position so as to cause the reversible motor 82 to rotate the elongate threaded rod 71 in a first direction "F", thus causing the circulating ball nut 72 and the extension leg 60 to travel along the elongate threaded rod 71 in a first direction as indicated by arrow "C" of Figure 6C, toward the first extended position of the extension leg 60. Correspondingly, the remainder of the elevating unit 20, the hand truck 22, and the payload 25 thereon are lifted upwardly, as indicated by arrow "H" in Figure 6C. When the wheels 46 of the hand truck 22 are slightly above a selected step of the stairs 23, the electrical switch 82 is manipulated to its third (neutral) position so as to stop the reversible motor 80. The elevating unit 20 and the hand truck 22 and payload 25 thereon are then leaned toward the stairs 23 until the wheels 46 are resting on said selected one of the steps of the stairs 23, as shown in Figure 6D. The electrical switch 82 is then manipulated to its second position so as to cause the reversible motor 80 to rotate the elongate threaded rod in its second rotational direction "S", thus causing the extension leg 60 to move in a second direction as indicated by arrow "D" in Figure 6E, towards its second retracted position. The same cycle of steps is then repeated to move the hand truck 22 and payload 25 up subsequent ones of the steps 23. The elevating unit 20 may be used to also manipulate a manual hand truck 22 and a payload 25 thereon down a set of stairs, by using a generally reversed procedure to that described above.

Similarly, as can be seen in Figures 7A and 7B, the elevating unit 20 may be used to assist in lifting the hand truck 22 and payload 25 thereon onto the delivery truck 21, as shown by arrow "J" in Figure 7B, in a manner similar to that described for manipulating the hand truck 22 and payload 25 thereon up a flight of stairs. The elevating unit 20 may be used to also manipulate a manual hand truck 22 and a payload thereon down off of the delivery truck 21.

A very important advantage of the elevating unit 20 of the present invention over the prior art is that of cost efficiency. It is not necessary to replace presently owned manual hand trucks, many of which manual hand trucks are quite expensive, with even more expensive powered hand trucks. Instead, it is necessary to purchase a desired quantity of the relatively inexpensive elevating unit of the present invention only as complementary units to presently owned manual hand trucks.

Other modifications and alterations may be used in the design and manufacture of the apparatus of the present invention without departing from the scope of the accompanying claims. For instance, it is contemplated that a manual version of the elevating unit 20 of the present invention could employ a manual crank (not shown) in place of the electrically energizable motor 80. These and other routine modifications will be readily apparent to those skilled in the art, such that the invention is only limited by the scope of the appended claims.

## Claims

1. The combination of a hand truck and an elevating unit wherein:
the hand truck has a frame extending in a substantially vertical direction from a lower end to an upper end and extending laterally from a left side to a right side, upper and lower cross-members extending substantially between said left and right sides of said frame, a handle means disposed adjacent said upper end, a front side and a back side, with a payload supporting surface extending forwardly from said front side, and a pair of wheels operatively mounted on said frame adjacent the lower end thereof for rotation about a common lateral axis; wherein,
the elevating unit has a main body portion having a front side and a back side, an extension leg having a foot portion and being operatively mounted on said main body portion for selectively controlled movement between a first extended position whereat said foot portion is disposed below said lower end of said frame and a second retracted position whereat said foot portion is raised from being disposed below said lower end of said frame, drive means operatively coupled to said extension leg to selectively move said extension leg in a first direction from said first extended position to said second retracted position and in a second direction from said second retracted position to said first extended position, control means operatively coupled to said drive means to permit selective actuation of said drive means in said first and second directions; and, wherein the improvement comprises:
a first bracket means mounted on said main body portion in disposed relation to said front side of said main body portion for readily removable secured engagement of the main body portion to said upper cross-member of said hand truck, said first bracket means being substantially C-shaped in cross section, defining a forwardly facing opening, with a lower arm of the C-shape forming a load bearing portion and with an upper arm of the C-shape forming a weight transmitting portion for transmitting a portion of the weight of said elevating unit to said upper cross-member, said upper and lower arm portions being spaced apart sufficiently to receive said upper cross-member there between;
a channel blocking means readily movable between a first blocking position whereat said channel blocking means occludes said opening to thereby hold said upper cross-member in operative, secured relation, and a second open position whereat said channel blocking means is removed from occluding said opening to thereby provide for ingress and egress of said upper cross-member; and,
a second bracket means rigidly mounted on said main body portion and in disposed relation to said back side of said main body portion for readily removable secured engagement of the main body portion to said lower cross-member, said second bracket means comprising a weight transmitting portion shaped and dimensioned to rest on said lower cross-member in weight transmitting relation for transmitting a portion of the weight of said elevating unit to said lower cross-member.

2. The combination of claim 1, wherein the elevating unit further comprises a flange portion depending from said weight transmitting portion of said second bracket means, such that said flange portion, said weight transmitting portion, and said main body portion together form a downwardly open generally "U"-shaped channel dimensioned to receive said lower cross-member therein.

3. The combination of claim 2, wherein said lower cross-member of the hand truck comprises an axle member defining said common lateral axis.

4. The combination of claim 3, wherein the hand truck further comprises a pair of spacer members disposed in surrounding relation around said axle member with said spacer members being spaced apart one from the other on said axle member by a centrally disposed gap, and wherein said second bracket means engages said axle member at said gap.

5. The combination of claim 4, wherein said extension leg is elongate along a first longitudinal axis.

6. The combination of claim 5, wherein said extension leg is substantially vertically disposed when in said first extended position.

7. The combination of claim 6, wherein said extension leg is substantially vertically disposed when in said second retracted position.

8. The combination of claim 7, wherein said extension leg moves linearly along its first longitudinal axis when moving between its first extended position and its second retracted position.

9. The combination of claim 8, wherein said drive means comprises a substantially vertically disposed elongate threaded rod having a second longitudinal axis substantially aligned with said first longitudinal axis, and being operatively mounted on said main body portion for rotation in opposed first and second rotational directions about said second longitudinal axis, a recirculating ball nut threadibly engaged on said elongate threaded rod for movement along the length thereof as said elongate threaded rod rotates, and wherein said extension leg is secured to said recirculating ball nut for movement therewith as aforesaid, whereby rotation of said threaded rod in said first rotational direction causes linear movement of said extension leg toward said first extended position and rotation of said threaded rod in said second rotational direction causes linear movement of said extension leg toward said second retracted position.

10. The combination of claim 9, wherein said extension leg is disposed in sliding relation within said main body portion and in surrounding relation to said threaded rod.

11. The combination of claim 10, further comprising slide bearing means disposed in operative relation between said extension leg and said main body portion.

12. The combination of claim 11, wherein said slide bearing means comprises a first bearing assembly mounted on said extension leg adjacent the top end thereof, and a second bearing assembly mounted on said main body portion adjacent the top end thereof.

13. The combination of claim 12, wherein said drive means comprises motor means operatively connected to said elongate threaded rod to rotate said elongate threaded rod in said opposed first and second rotational directions.

14. The combination of claim 13, wherein said motor means comprises an electrically energizable reversible motor.

15. The combination of claim 14, wherein said control means comprises a three position electrical switch connected in electrically conductive relation between an electrical power source and said electrically energizable motor, with a first position of said three position electrical switch causing said threaded rod to rotate in said first rotational direction, with a second position of said three position electrical switch causing said threaded rod to rotate in said second rotational direction, and with a third position of said three position electrical switch precluding said threaded rod from rotating.

16. The combination of claim 15, wherein said electrical power source comprises an electrical power storage cell mounted on said main body portion.

17. The combination of claim 16, wherein said electrical power storage cell is rechargeable *in situ.*

## Patentansprüche

1. Kombination aus einer Handkarre und einer Hebeeinheit, bei der:
die Handkarre folgendes hat: einen Rahmen, der in einer im wesentlichen senkrechten Richtung von einem unteren Ende zu einem oberen Ende reicht und der seitlich von einer linken Seite zu einer rechten Seite reicht, wobei sich im wesentlichen zwischen der linken und der rechten Seite des Rahmens obere und untere Querelemente erstrecken, Handgriffmittel, die anschließend an das obere Ende angeordnet sind, eine Vorderseite und eine Rückseite, wobei sich eine Nutzlast-Auflagefläche von der Vorderseite nach vorn erstreckt, und ein Paar Räder, die im Anschluß an das untere Ende des Rahmens zur Drehung um eine gemeinsame Querachse funktionell an diesem angebracht sind; bei der
die Hebeeinheit folgendes hat: einen Hauptabschnitt mit einer Vorderseite und einer Rückseite, einen Ausfahrabschnitt, der einen Fußabschnitt hat und für die selektiv gesteuerte Bewegung zwischen einer ersten, ausgezogenen Position, in der sich der Fußabschnitt unter dem unteren Ende des Rahmens befindet, und einer zweiten, zusammengeschobenen Position, in welcher der Fußabschnitt gegenüber der Anordnung unter dem unteren Ende des Rahmens angehoben ist, funktionell an dem Hauptabschnitt befestigt ist, Antriebsmittel, die funktionell mit dem Ausfahrabschnitt gekoppelt sind, um den Ausfahrabschnitt selektiv in einer ersten Richtung aus der ersten, ausgezogenen Position in die zweite, zusammengeschobene Position und in einer zweiten Richtung aus der zweiten, zusammengeschobenen Position in die erste, ausgezogene Position zu bewegen, Steuerungsmittel, die funktionell mit den Antriebsmitteln gekoppelt sind, um die selektive Betätigung der Antriebsmittel in der ersten und zweiten Richtung zu ermöglichen; und bei der die Verbesserung in folgendem besteht:
ersten Haltemitteln, die für einen leicht lösbaren Sicherungseingriff des Hauptabschnitts mit dem oberen Querelement der Handkarre an dem Hauptabschnitt in einem Dispositionsverhältnis zur Vorderseite des Hauptabschnitts angebracht sind, wobei die ersten Haltemittel im Querschnitt im wesentlichen eine C-Form haben, die eine nach vom zeigende Öffnung definiert, wobei ein unterer Arm der C-Form einen lasttragenden Abschnitt bildet und ein oberer Arm der C-Form einen gewichtübertragenden Abschnitt bildet, um einen Teil des Gewichts der Hebeeinheit auf das obere Querelement zu übertragen, wobei der obere und untere Armabschnitt mit einem ausreichenden Zwischenraum zueinander angeordnet sind, um zwischen sich das obere Querelement aufzunehmen;
Öffnungblockiermittel, die leicht zwischen einer ersten, einer Blockierposition, in der die Öffnungblockiermittel die Öffnung verschließen, um dadurch das obere Querelement in einem einsatzbereiten, gesicherten Verhältnis zu halten, und einer zweiten, offenen Position bewegt werden können, in der die Öffnungblockiermittel aus der Verschlußposition der Öffnung entfernt worden sind, um dadurch das Hinein- und Herausführen des oberen Querelements zu ermöglichen; und
zweite Haltemittel, die für einen leicht lösbaren Sicherungseingriff des Hauptabschnitts mit dem unteren Querelement starr an dem Hauptabschnitt angebracht sind und ein Dispositionsverhältnis zu der Rückseite des Hauptabschnitts aufweisen, wobei die zweiten Haltemittel einen gewichtübertragenden Abschnitt aufweisen, der so geformt und bemessen ist, daß er in einem Gewichtübertragungsverhältnis auf dem unteren Querelement ruht, um einen Teil des Gewichts der Hebeeinheit auf das untere Querelement zu übertragen.

2. Kombination nach Anspruch 1, bei der die Hebeeinheit außerdem einen Flanschabschnitt aufweist, der von dem gewichtübertragenden Abschnitt der zweiten Haltemittel abhängig ist, derartig, daß der Flanschabschnitt, der gewichtübertragende Abschnitt und der Hauptabschnitt zusammen ein nach unten offenes, allgemein U-förmiges Profil bilden, das so bemessen ist, daß darin das untere Querelement aufgenommen werden kann.

3. Kombination nach Anspruch 2, bei der das untere Querelement der Handkarre ein Achsenelement aufweist, das die gemeinsame Querachse bildet.

4. Kombination nach Anspruch 3, bei der die Handkarre außerdem ein Paar Abstandshalter aufweist, die in einem umschließenden Verhältnis um das Achsenelement angeordnet sind, wobei die Abstandshalter auf dem Achsenelement durch eine in der Mitte angeordnete Lücke mit Zwischenraum zueinander angeordnet sind, und bei der die zweiten Haltemittel an der Lücke mit dem Achsenelement ineinandergreifen.

5. Kombination nach Anspruch 4, bei welcher der Ausfahrabschnitt langgestreckt längs einer ersten Längsachse ist.

6. Kombination nach Anspruch 5, bei welcher der Ausfahrabschnitt im wesentlichen senkrecht angeordnet ist, wenn er sich in der ersten, ausgezogenen Position befindet.

7. Kombination nach Anspruch 6, bei welcher der Ausfahrabschnitt im wesentlichen senkrecht angeordnet ist, wenn er sich in der zweiten, zusammengeschobenen Position befindet.

8. Kombination nach Anspruch 7, bei der sich der Ausfahrabschnitt linear längs seiner ersten Längsachse bewegt, wenn er sich zwischen seiner ersten, ausgezogenen Position und seiner zweiten, zusammengeschobenen Position bewegt.

9. Kombination nach Anspruch 8, bei der die Antriebsmittel folgendes umfassen: eine im wesentlichen senkrecht angeordnete, längliche Gewindestange, die eine zweite Längsachse hat, die im wesentlichen axial mit der ersten Längsachse ausgerichtet ist und die zur Drehung in entgegengesetzten ersten und zweiten Rotationsrichtungen um die zweite Längsachse funktionell an dem Hauptabschnitt angebracht ist, eine Kugelumlaufinutter, die sich schraubend auf der länglichen Gewindestange im Eingriff befindet, um sich über deren Länge zu bewegen, wenn sich die längliche Gewindestange dreht, und bei welcher der Ausfahrabschnitt an der Kugelumlaufmutter befestigt ist, um sich wie oben mit dieser zu bewegen, wobei die Drehung der Gewindestange in der ersten Rotationsrichtung die lineare Bewegung des Ausfahrabschnitts in die erste, ausgezogene Position bewirkt und die Drehung der Gewindestange in der zweiten Rotationsrichtung die lineare Bewegung des Ausfahrabschnitts in die zweite, zusammengeschobene Position bewirkt.

10. Kombination nach Anspruch 9, bei welcher der Ausfahrabschnitt in einem Gleitverhältnis innerhalb des Hauptabschnitts und in einem umschließenden Verhältnis zu der Gewindestange angeordnet ist.

11. Kombination nach Anspruch 10, die außerdem Gleitlagermittel aufweist, die in einem funktionellen Verhältnis zwischen dem Ausfahrabschnitt und dem Hauptabschnitt angeordnet sind.

12. Kombination nach Anspruch 11, bei der die Gleitlagermittel eine erste Lagerbaugruppe, die angrenzend an das obere Ende des Ausfahrabschnitts an diesem angebracht ist, und eine zweite Lagerbaugruppe aufweist, die angrenzend an das obere Ende des Hauptabschnitts an diesem angebracht ist.

13. Kombination nach Anspruch 12, bei der die Antriebsmittel Motormittel umfassen, die funktionell mit der länglichen Gewindestange verbunden sind, um die längliche Gewindestange in den entgegengesetzten ersten und zweiten Rotationsrichtungen zu drehen.

14. Kombination nach Anspruch 13, bei der die Motormittel einen elektrisch zu speisenden Umkehrmotor umfassen.

15. Kombination nach Anspruch 14, bei der die Steuerungsmittel einen elektrischen Dreiwegschalter aufweisen, der in einem elektrisch leitenden Verhältnis zwischen einer Elektroenergiequelle und dem elektrisch zu speisenden Motor geschaltet ist, wobei eine erste Position des elektrischen Dreiwegschalters die Rotation der Gewindestange in der ersten Rotationsrichtung bewirkt, eine zweite Position des elektrischen Dreiwegschalters die Rotation der Gewindestange in der zweiten Rotationsrichtung bewirkt und eine dritte Position des elektrischen Dreiwegschalters die Rotation der Gewindestange ausschließt.

16. Kombination nach Anspruch 15, bei der die Elektroenergiequelle eine elektrische Speicherzelle umfaßt, die an dem Hauptabschnitt angebracht ist.

17. Kombination nach Anspruch 16, bei der die elektrische Speicherstelle vor Ort aufgeladen werden kann.

## Revendications

1. Combinaison d'un chariot manuel et d'une unité élévatrice, dans laquelle:
le chariot manuel comporte un cadre s'étendant dans une direction pratiquement verticale d'une extrémité inférieure vers une extrémité supérieure et s'étendant latéralement d'un côté gauche vers un côte droit, des traverses supérieure et inférieure s'étendant pratiquement entre lesdits côtés de gauche et de droite dudit cadre, un moyen de poignée agencé près de ladite extrémité supérieure, un côté avant et un côté arrière, une surface de support d'une charge mobile s'étendant vers l'avant à partir dudit côté avant, et une paire de roues montées en service sur ledit cadre près de l'extrémité inférieure correspondante, en vue d'une rotation autour d'un axe latéral commun; dans laquelle,
l'unité élévatrice comporte une partie de corps principale comportant un côté avant et un côté arrière, une branche d'extension comportant une partie de base et étant montée en service sur ladite partie de corps principale en vue d'un déplacement à commande sélective entre une première position étendue, dans laquelle ladite partie de base est agencée au-dessous de ladite extrémité inférieure dudit cadre, et une deuxième position rétractée, dans laquelle ladite partie de base est soulevée de sa position au-dessous de ladite extrémité inférieure dudit cadre, un moyen d'entraînement couplé en service à ladite branche d'extension pour déplacer sélectivement ladite branche d'extension dans une première direction, de ladite première position étendue vers ladite deuxième position rétractée, et dans une deuxième direction, de ladite deuxième position rétractée vers ladite première position étendue, un moyen de commande couplé en service audit moyen d'entraînement pour permettre un actionnement sélectif dudit moyen d'entraînement dans lesdites première et deuxième directions; et dans laquelle l'amélioration comprend:
un premier moyen de console monté sur ladite partie de corps principale, dans une relation établie par rapport audit côté avant de ladite partie de corps principale, en vue d'un engagement fixe à dégagement rapide de la partie de corps principale dans ladite traverse supérieure dudit chariot manuel, ledit premier moyen de console ayant une section transversale pratiquement en C, définissant une ouverture orientée vers l'avant, un bras inférieur de la forme en C constituant une partie de support de charge, un bras supérieur de la forme en C constituant une partie de transmission du poids pour transmettre une partie du poids de ladite unité élévatrice vers ladite traverse supérieure, lesdites parties de bras supérieure et inférieure étant espacées suffisamment pour recevoir ladite traverse supérieure entre elles;
un moyen de blocage de canal pouvant être déplacé rapidement entre une première position de blocage, dans laquelle le moyen de blocage de canal obture ladite ouverture, pour maintenir ainsi ladite traverse supérieure dans une relation opérationnelle fixe, et une deuxième position ouverte, dans laquelle ledit moyen de blocage de canal est déplacé, n'obturant plus ladite ouverture, permettant ainsi l'entrée et la sortie de ladite traverse supérieure; et
un deuxième moyen de console monté de façon rigide sur ladite partie de corps principale dans une relation établie par rapport audit côté arrière de ladite partie de corps proncipale, en vue d'un engagement fixe à dégagement rapide de la partie de corps principale dans ladite traverse inférieure, ledit deuxième moyen de console comprenant une partie de transmission du poids formée et dimensionnée de sorte à reposer sur ladite traverse inférieure, dans une relation de transmission du poids, pour transmettre une partie du poids de ladite unité élévatrice vers ladite traverse inférieure.

2. Combinaison selon la revendication 1, dans laquelle l'unité élévatrice comprend en outre une partie de bride s'étendant à partir de ladite partie de transmission du poids dudit deuxième moyen de console, de sorte que ladite partie de bride, ladite partie de transmission du poids et ladite partie de corps principale forment ensemble un canal ouvert vers le bas, ayant en général une forme en U, dimensionné de sorte à recevoir ladite traverse inférieure.

3. Combinaison selon la revendication 2, dans laquelle ladite traverse inférieure du chariot manuel comprend un élément d'essieu définissant ledit axe latéral commun.

4. Combinaison selon la revendication 3, dans laquelle le chariot manuel comprend en outre une paire d'entretoises, agencées de sorte à entourer ledit élément d'essieu, lesdits moyens d'entretoise étant espacés sur ledit élément d'essieu par un espace à agencement central, ledit deuxième moyen de console s'engageant dans ledit élément d'essieu au niveau dudit espace.

5. Combinaison selon la revendication 4, dans laquelle ladite branche d'extension est allongée le long d'un premier axe longitudinal.

6. Combinaison selon la revendication 5, dans laquelle ladite branche d'extension est agencée de façon pratiquement verticale dans ladite première position étendue.

7. Combinaison selon la revendication 6, dans laquelle ladite branche d'extension est agencée de manière pratiquement verticale dans ladite deuxième position rétractée.

8. Combinaison selon la revendication 7, dans laquelle ladite branche d'extension se déplace linéairement le long de son premier axe longitudinal lors de son déplacement entre sa première position étendue et sa deuxième position rétractée.

9. Combinaison selon la revendication 8, dans laquelle ledit moyen d'entraînement comprend une tige filetée allongée agencée de manière pratiquement verticale, comportant un deuxième axe longitudinal pratiquement aligné avec ledit premier axe longitudinal et monté en service sur ladite partie de corps principale en vue d'une rotation dans des première et deuxième directions de rotation opposées autour dudit deuxième axe longitudinal, un écrou sphérique à recirculation engagé par filetage dans ladite tige filetée allongée en vue d'un déplacement le long de la longueur de celle-ci, lors de la rotation de ladite tige filetée allongée, ladite branche d'extension étant fixée audit écrou sphérique à recirculation en vue d'un déplacement avec celui-ci, comme indiqué ci-dessus, la rotation de ladite tige filetée dans ladite première direction de rotation entraînant un déplacement linéaire de ladite branche d'extension vers ladite première position étendue et la rotation de ladite tige filetée dans ladite deuxième direction de rotation entraînant un déplacement linéaire de ladite branche d'extension vers ladite deuxième position rétractée.

10. Combinaison selon la revendication 9, dans laquelle ladite branche d'extension est agencée par glissement dans ladite partie de corps principale, et entoure ladite tige filetée.

11. Combinaison selon la revendication 10, comprenant en outre un moyen de palier à glissement agencé en service entre ladite branche d'extension et ladite partie de corps principale.

12. Combinaison selon la revendication 11, dans laquelle ledit moyen de palier à glissement comprend un premier assemblage de palier monté sur ladite branche d'extension près de l'extrémité supérieure correspondante, et un deuxième assemblage de palier monté sur ladite partie de corps principale près de l'extrémité supérieure correspondante.

13. Combinaison selon la revendication 12, dans laquelle ledit moyen d'entraînement comprend un moyen de moteur connecté en service à ladite tige filetée allongée pour faire tourner ladite tige filetée allongée dans lesdites première et deuxième directions de rotation opposées.

14. Combinaison selon la revendication 13, dans laquelle ledit moyen de moteur comprend un moteur bidirectionnel à commande électrique.

15. Combinaison selon la revendication 14, dans laquelle ledit moyen de commande comprend un commutateur électrique à trois positions connecté dans une relation électroconductrice entre une source d'énergie électrique et ledit moteur à commande électrique, une première position dudit commutateur électrique à trois positions entraînant la rotation de ladite tige filetée dans ladite première direction de rotation, une deuxième position dudit commutateur électrique à trois positions entraînant la rotation de ladite tige filetée dans ladite deuxième direction de rotation, et une troisième position dudit commutateur électrique à trois positions empêchant la rotation de ladite tige filetée.

16. Combinaison selon la revendication 15, dans laquelle ladite source d'énergie électrique comprend une pile accumulatrice d'énergie électrique montée sur ladite partie de corps principale.

17. Combinaison selon la revendication 16, dans laquelle ladite pile accumulatrice d'énergie électrique peut être rechargée sur place.
